# EUROPEAN PATENT SPECIFICATION

(11) **EP 4 076 841 B1**
(45) Date of publication and mention of the grant of the patent: **31.01.2024**
(21) Application number: 20828850.6
(22) Date of filing: 11.12.2020
(51) Int. Cl.: B24D 3/00, B24D 3/28, B24D 3/34, C09K 3/14

(54) **BONDED ABRASIVE ARTICLE AND METHOD OF MAKING THE SAME**
GEBONDETER SCHLEIFARTIKEL UND VERFAHREN ZUR HERSTELLUNG DAVON
ARTICLE ABRASIF LIÉ ET SON PROCÉDÉ DE FABRICATION

(30) Priority: 16.12.2019 US 201962948433 P
(43) Date of publication of application: 26.10.2022
(73) Proprietor: 3M Innovative Properties Company, Saint Paul, Minnesota 55133-3427 (US)
(72) Inventor: SCHILLO-ARMSTRONG, Melissa C., Saint Paul, Minnesota 55133-3427 (US); LEE, Hae-Seung H., Saint Paul, Minnesota 55133-3427 (US)
(74) Representative: Mathys & Squire
(86) International application number: PCT/IB2020/061855
(87) International publication number: WO 2021/124059

(56) References cited:
- EP-A2- 1 904 577
- WO-A1-2019/135177

## Description

### FIELD

The present invention relates to a bonded abrasive article, a method for forming a bonded abrasive article and an abrasive particle.

### BACKGROUND

Bonded abrasives include abrasive particles retained in a binder. Bonded abrasive types include, for example, grinding wheels, cutoff wheels, hones, whetstones. Two types of binders are commonly used. These include glassy inorganic binders (vitreous bond) and resinous organic binders (resin bond). Many bonded abrasive articles include a phenolic binder that includes the reaction product of one or more curable phenolic resins.

Published PCT Application WO 2019/135177 A1 describes abrasive grains surface-treated with a surface treatment agent comprising a benzene ring and two or more hydroxy groups directly bonded to the benzene ring as well as an abrasive member comprising: a substrate; abrasive grains surface-treated with a surface treatment agent containing a benzene ring and two or more hydroxy groups directly bonded to the benzene ring; and a binder binding the substrate and the abrasive grains. In addition WO 2019/135177 describes examples of the binder resin include phenolic resins, urethane resins, urea resins, and epoxy resins as well as a method for manufacturing an abrasive member, the method comprising: a surface treatment step of mixing a surface treatment agent containing a benzene ring and two or more hydroxy groups directly bonded to the benzene ring and abrasive grains in a solvent to surface-treat the abrasive grains and obtain a treated liquid containing surface-treated abrasive grains; an addition step of adding a binder resin to the treated liquid to obtain a coating liquid containing the surface-treated abrasive grains and the binder resin; and a coating step of coating a substrate with the coating liquid to obtain an abrasive member containing the substrate and the surface-treated abrasive grains adhered to the substrate.

### SUMMARY

The present invention provides a bonded abrasive article as set out in claim 1, a method for forming a bonded abrasive article as set out in claim 7, and an abrasive particle as set out in claim 15.

### BRIEF DESCRIPTION OF THE DRAWINGS

FIG. 1 is a schematic perspective view of an exemplary bonded abrasive cut-off wheel according to embodiments described here.
FIG. 2 is a schematic cross-sectional side view of exemplary bonded abrasive cut-off wheel shown in FIG. 1 taken along line 2-2.
FIG. 3 illustrates a chemical reaction for forming a catechol-based polymer resin.
FIG. 4 illustrates a chemical reaction for forming a phenolic polymer resin.
FIG. 5 illustrates a method of forming a bonded abrasive article in accordance with embodiments described herein.
FIG. 6 illustrates a block diagram of components of a bonded abrasive article according to embodiments described here.
FIG. 7 illustrates an example bonded abrasive article.

Repeated use of reference characters in the specification and drawings is intended to represent the same or analogous features or elements of the disclosure. It should be understood that numerous other modifications and embodiments can be devised by those skilled in the art, which fall within the scope of the appended claims.

The figures may not be drawn to scale.

### DETAILED DESCRIPTION

Catechol moiety has been of interest in various applications including coatings, adhesives and flame retardants. In the 1970s, scientists did thorough research regarding adhesion of mussels in harsh and wet conditions, an unusual phenomenon of interest to many researchers. It was found that abnormally high concentrations of catecholic amino acids such as 3,4-dihydroxy-L-phenylalanine (DOPA) existed and researches eventually proved that the catechol moiety (dihydroxyl phenyl) played a key role in underwater adhesion. Researchers then concerned themselves with making materials with catechol functional groups that mimic the natural glue of the mussel. Polydopamine was identified, which can be autopolymerized under basic conditions. Such methods can be used herein to deposit nanometer dopamine coatings on various substrates.

Similar methods have been used in abrasives. For example, U.S. Patent 10/556,321 to Saint-Gobain recites using autopolymerization of 2-(3,4-Dihydroxyphenyl)ethylamine under basic conditions with TRIS buffer solution and reported enhanced flexure strength with specimens made with polydopamine coated abrasive grain. While resulting in better performance, the coating method is disadvantageous for manufacturing due to high chemical cost, long coating time (about 24 hours), tedious drying steps, and pH sensitive reaction conditions. Similarly, published PCT Application WO 2019/135177 also describes a surface treatment agent with a catechol group. However, while prior art publications disclose starting monomers including a catechol group (such as dopamine, tannic acid, pyrogallic acid, epinephrine, normetanephrine, tyrosine, DOPA, norepinephrine, etc.), they do not teach or suggest using catechol itself as a starting material.

As described herein, abrasive articles and methods of making them are described using catechol as the basis for a resin coating for abrasive particles. The catechol-based resin increases bonding between abrasive particles and the resin matrix of a bonded abrasive article, reducing shelling and improving live of bonded components. The use of catechol itself results in a cost savings over prior art processes through the use of a simpler manufacturing method.

As used herein:
The term "bonded abrasive matrix" refers to a unitary mass of abrasive particles, binder resin, and optional additives such as, for example, fillers, pore former, fragrances, reinforcing fibers and scrims, and antiloading compounds. It does not include extraneous components of bonded abrasive articles such as, for example, wheel hubs, shafts, and labels.

In referring to shaped abrasive particles, the term "length" refers to the maximum dimension of a shaped abrasive particle. "Width" refers to the maximum dimension of the shaped abrasive particle that is perpendicular to the length. "Thickness" or "height" refer to the dimension of the shaped abrasive particle that is perpendicular to the length and width.

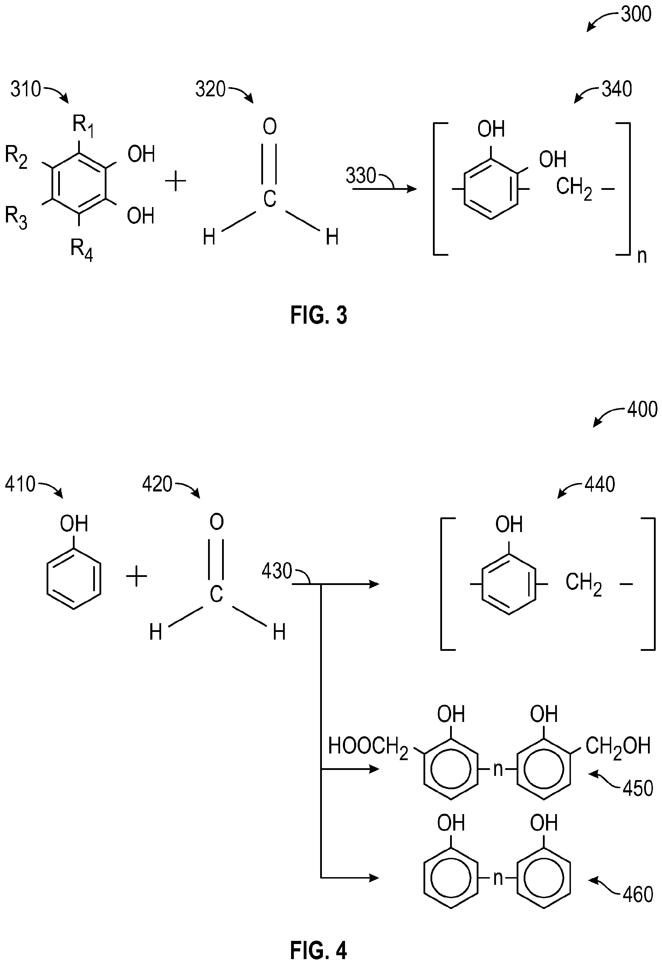

"Catechol-like" molecules, as used herein, refer to molecules with two hydroxyl groups attached to a benzene ring in ortho positions with respect to each other, as illustrated in FIG. 3. The benzene ring has four other positions to which functional groups may be attached. As used herein, "catechol" refers to a molecule where the other four positions have a single hydrogen atom attached. "Catechol-like" molecules refer to molecules where up to two of the four positions have a functional group attached. For example, any of the following are examples of catechol-like molecules: dopamine, 4-fluorocatechol, 4-methylcatechol, 4-chlorocatechol, 4-bromocatechol, 1,2-dihydroxynaphthalene, 2,3-dihydroxynaphthalene, 1,2,4-trihydroxybenzene, 3-methoxycatechol, 3,4-dihydroxybenzaldehyde, 4-tert-butylpyrocatechol, 3,4-dihydroxybenzonitrile, 2,3-dihydroxybenzaldehyde, 3', 4'-dihydroxyacetophenone, 3,4-dihydroxybenzyl alcohol, 3,4-dihydroxybenzophenone, 4-nitrocatechol, nordihydroguaiaretic acid, methyl 3,4-dihydroxybenzoate, 4-allylpyrocatechol, sodium 6,7-dihydroxynaphthalene-2-sulfonate, 3,5-di-tert-butylcatechol, 2-(3,4-dihydroxyphenyl)ethyl alcohol, 3,4-dihydroxybenzoic acid, tiron monohydrate, pyrogallol, tannic acid, gallic acid, 5-methylpyrogallol, 2,3,6,7,10,11-hexahydroxytriphenylene, hexahydroxybenzene, 3,4,5-trihydroxybenzaldehyde, 2,3,4-trihydroxybenzaldehyde, and 2,3,4,4'-tetrahydroxydiphenylmethane, for example. Of those described above, examples of a surface treatment agent containing a pyrogallol group include pyrogallol, tannic acid, gallic acid, 5-methylpyrogallol, 2,3,6,7,10,11-hexahydroxytriphenylene, hexahydroxybenzene, 3,4,5-trihydroxybenzaldehyde, 2,3,4-trihydroxybenzaldehyde, and 2,3,4,4'-tetrahydroxydiphenylmethane.

Bonded abrasive articles according to the present disclosure include abrasive particles retained in a bonded abrasive matrix (also known as a binder). The bonded abrasive matrix includes a phenolic binder formed by curing a curable resole phenolic resin, novolac phenolic resin, or a combination of resole phenolic resin and novolac phenolic resin.

Novolac phenolic resins are characterized by being acid-catalyzed and having a ratio of formaldehyde to phenol of less than one, typically between 0.5:1 and 0.8:1. Resole phenolic resins are characterized by being alkaline-catalyzed and having a ratio of formaldehyde to phenol of greater than or equal to one, typically from 1:1 to 3:1. Novolac and resole phenolic resins may be chemically modified (e.g., by reaction with epoxy compounds), or they may be unmodified.

Curable phenolic resins are well-known and readily available from commercial sources. Examples of commercially available novolac resins include DUREZ 1364, a two-step, powdered phenolic resin (marketed by Durez Corporation of Addison, Texas, under the trade designation VARCUM (e.g., 29302)), or HEXION AD5534 RESIN (marketed by Hexion Specialty Chemicals, Inc. of Louisville, Kentucky). Examples of commercially available resole phenolic resins useful in practice of the present disclosure include those marketed by Durez Corporation under the trade designation VARCUM (e.g., 29217, 29306, 29318, 29338, 29353); those marketed by Ashland Chemical Co. of Bartow, Florida, under the trade designation AEROFENE (e.g., AEROFENE 295); and those marketed by Kangnam Chemical Company Ltd. of Seoul, South Korea, under the trade designation "PHENOLITE" (e.g., PHENOLITE TD-2207).

Curable phenolic resins may include at least one catalyst to facilitate curing. Exemplary acidic catalysts suitable for curing phenolic resins include sulfuric, hydrochloric, phosphoric, oxalic, and p-toluenesulfonic acids. Alkaline catalysts suitable for curing phenolic resins include sodium hydroxide, barium hydroxide, potassium hydroxide, calcium hydroxide, organic amines, or sodium carbonate. Catalysts and/or initiators may be added to the bonded abrasive matrix precursor (i.e., material that after curing forms the bonded abrasive matrix) depending on the desired organic binder material. Typically, heat is applied to advance curing of the bonded abrasive matrix precursor material; however, other sources of energy (e.g., microwave radiation, ultraviolet light, visible light) may also be used. The specific curatives and amounts used will be apparent to those skilled in the art.

The bonded abrasive matrix comprises 10 to 30 weight percent, preferably 15 to 25 weight percent, of phenolic binder, based on the total weight of the bonded abrasive matrix. In some preferred embodiments, the curable phenolic resin includes a mixture of 4 to 8 parts by weight of resole phenolic resin for every 8 to 16 parts by weight of novolac phenolic resin, preferably 5 to 7 parts by weight of resole phenolic resin for every 9 to 15 parts of by weight novolac phenolic resin, and more preferably 6 parts by weight of resole phenolic resin for about every 10 to 14 parts by weight of novolac phenolic resin.

Phenolic resin may be used in both the powder form and liquid state. Although phenolic resins are widely used, it is within the scope of this disclosure to include other organic binder materials including, for example, epoxy resins, urea-formaldehyde resins, aminoplasts, and epoxyreactive acrylic binders. The organic binder material may also be modified with other binder materials to improve or alter the properties of the binder material.

In some embodiments, the bonded abrasive articles (e.g., wheels) include from about 10 to about 70 percent by weight of abrasive particles (e.g., shaped and/or crushed abrasive particles), typically 30 to 65 percent by weight, and more typically 45 to 65 percent by weight, based on the total weight of the binder material and abrasive particles.

The bonded abrasive articles may comprise crushed abrasive particles whether by themselves or in combination with shaped abrasive particles. If shaped abrasive particles and crushed abrasive particles are both used, the crushed abrasive particles are typically of a finer size grade or grades (e.g., if a plurality of size grades are used) than the shaped abrasive particles, although this is not a requirement.

Useful crushed abrasive particles include, for example, crushed particles of fused aluminum oxide, heat treated aluminum oxide, white fused aluminum oxide, ceramic aluminum oxide materials such as those commercially available under the trade designation 3M CERAMIC ABRASIVE GRAIN from 3M Company of St. Paul, Minnesota, black silicon carbide, green silicon carbide, titanium diboride, boron carbide, tungsten carbide, titanium carbide, diamond, cubic boron nitride, garnet, fused alumina zirconia, sol-gel derived abrasive particles, iron oxide, chromia, ceria, zirconia, titania, silicates, tin oxide, silica (such as quartz, glass beads, glass bubbles and glass fibers), silicates (such as talc, clays (e.g., montmorillonite), feldspar, mica, calcium silicate, calcium metasilicate, sodium aluminosilicate, sodium silicate), flint, and emery. Examples of sol-gel derived abrasive particles can be found in U. S. Patent Nos. 4,314,827 (Leitheiser et al.), 4,623,364 (Cottringer et al.), 4,744,802 (Schwabel), 4,770,671 (Monroe et al.), and 4,881,951 (Monroe et al.). It is also contemplated that the abrasive particles may comprise abrasive agglomerates such, for example, as those described in U. S. Patent Nos. 4,652,275 (Bloecher et al.) or 4,799,939 (Bloecher et al.).

Abrasive particles (e.g., shaped and/or crushed abrasive particles) composed of crystallites of alpha alumina, magnesium alumina spinel, and a rare earth hexagonal aluminate may be prepared using sol-gel precursor alpha alumina particles according to methods described in, for example, U. S. Patent No. 5,213,591 (Celikkaya et al.) and U. S. Pat. Appln. Publ. Nos. 2009/0165394 A1 (Culler et al.) and 2009/0169816 A1 (Erickson et al.).

In some embodiments, alpha alumina based abrasive particles (e.g., shaped abrasive particles) can be made according to a multistep process. Briefly, the method comprises the steps of making either a seeded or non-seeded sol-gel alpha alumina precursor dispersion that can be converted into alpha alumina; filling one or more mold cavities having the desired outer shape of the shaped abrasive particle with the sol-gel, drying the sol-gel to form precursor abrasive particles; removing the precursor shaped abrasive particles from the mold cavities; calcining the precursor shaped abrasive particles to form calcined, precursor shaped abrasive particles, and then sintering the calcined, precursor shaped abrasive particles to form shaped abrasive particles. The process will now be described in greater detail.

The first process step involves providing either a seeded or non-seeded dispersion of an alpha alumina precursor that can be converted into alpha alumina. The alpha alumina precursor dispersion often comprises a liquid that is a volatile component. In one embodiment, the volatile component is water. The dispersion should comprise a sufficient amount of liquid for the viscosity of the dispersion to be sufficiently low to enable filling mold cavities and replicating the mold surfaces, but not so much liquid as to cause subsequent removal of the liquid from the mold cavity to be prohibitively expensive. In one embodiment, the alpha alumina precursor dispersion comprises from 2 percent to 90 percent by weight of the particles that can be converted into alpha alumina, such as particles of aluminum oxide monohydrate (boehmite), and at least 10 percent by weight, or from 50 percent to 70 percent, or 50 percent to 60 percent, by weight of the volatile component such as water. Conversely, the alpha alumina precursor dispersion in some embodiments contains from 30 percent to 50 percent, or 40 percent to 50 percent, by weight solids.

Aluminum oxide hydrates other than boehmite can also be used. Boehmite can be prepared by known techniques or can be obtained commercially. Examples of commercially available boehmite include products having the trade designations "DISPERAL", and "DISPAL", both available from Sasol North America, Inc. of Houston, Texas, or "HiQ-40" available from BASF Corporation of Florham Park, New Jersey. These aluminum oxide monohydrates are relatively pure; that is, they include relatively little, if any, hydrate phases other than monohydrates, and have a high surface area.

The physical properties of the resulting shaped abrasive particles will generally depend upon the type of material used in the alpha alumina precursor dispersion. In one embodiment, the alpha alumina precursor dispersion is in a gel state. As used herein, a "gel" is a three-dimensional network of solids dispersed in a liquid.

The alpha alumina precursor dispersion may contain a modifying additive or precursor of a modifying additive. The modifying additive can function to enhance some desirable property of the abrasive particles or increase the effectiveness of the subsequent sintering step. Modifying additives or precursors of modifying additives can be in the form of soluble salts, typically water-soluble salts. They typically consist of a metal-containing compound and can be a precursor of oxide of magnesium, zinc, iron, silicon, cobalt, nickel, zirconium, hafnium, chromium, yttrium, praseodymium, samarium, ytterbium, neodymium, lanthanum, gadolinium, cerium, dysprosium, erbium, titanium, and mixtures thereof. The particular concentrations of these additives that can be present in the alpha alumina precursor dispersion can be varied based on skill in the art.

Typically, the introduction of a modifying additive or precursor of a modifying additive will cause the alpha alumina precursor dispersion to gel. The alpha alumina precursor dispersion can also be induced to gel by application of heat over a period of time. The alpha alumina precursor dispersion can also contain a nucleating agent (seeding) to enhance the transformation of hydrated or calcined aluminum oxide to alpha alumina. Nucleating agents suitable for this disclosure include fine particles of alpha alumina, alpha ferric oxide or its precursor, titanium oxides and titanates, chrome oxides, or any other material that will nucleate the transformation. The amount of nucleating agent, if used, should be sufficient to effect the transformation of alpha alumina. Nucleating such alpha alumina precursor dispersions is disclosed in U. S. Patent No. 4,744,802 (Schwabel).

A peptizing agent can be added to the alpha alumina precursor dispersion to produce a more stable hydrosol or colloidal alpha alumina precursor dispersion. Suitable peptizing agents are monoprotic acids or acid compounds such as acetic acid, hydrochloric acid, formic acid, and nitric acid. Multiprotic acids can also be used but they can rapidly gel the alpha alumina precursor dispersion, making it difficult to handle or to introduce additional components thereto. Some commercial sources of boehmite contain an acid titer (such as absorbed formic or nitric acid) that will assist in forming a stable alpha alumina precursor dispersion.

The alpha alumina precursor dispersion can be formed by any suitable means, such as, for example, by simply mixing aluminum oxide monohydrate with water containing a peptizing agent or by forming an aluminum oxide monohydrate slurry to which the peptizing agent is added.

Defoamers or other suitable chemicals can be added to reduce the tendency to form bubbles or entrain air while mixing. Additional chemicals such as wetting agents, alcohols, or coupling agents can be added if desired. The alpha alumina abrasive particles may contain silica and iron oxide as disclosed in U. S. Patent No. 5,645,619 (Erickson et al.). The alpha alumina abrasive particles may contain zirconia as disclosed in U. S. Patent No. 5,551,963 (Larmie). Alternatively, the alpha alumina abrasive particles can have a microstructure or additives as disclosed in U. S. Patent No. 6,277,161 (Castro).

The second process step involves providing a mold having at least one mold cavity, and preferably a plurality of cavities. The mold can have a generally planar bottom surface and a plurality of mold cavities. The plurality of cavities can be formed in a production tool. The production tool can be a belt, a sheet, a continuous web, a coating roll such as a rotogravure roll, a sleeve mounted on a coating roll, or die. In one embodiment, the production tool comprises polymeric material. Examples of suitable polymeric materials include thermoplastics such as polyesters, polycarbonates, poly(ether sulfone), poly(methyl methacrylate), polyurethanes, polyvinylchloride, polyolefin, polystyrene, polypropylene, polyethylene or combinations thereof, or thermosetting materials. In one embodiment, the entire tooling is made from a polymeric or thermoplastic material. In another embodiment, the surfaces of the tooling in contact with the sol-gel while drying, such as the surfaces of the plurality of cavities, comprises polymeric or thermoplastic materials and other portions of the tooling can be made from other materials. A suitable polymeric coating may be applied to a metal tooling to change its surface tension properties by way of example.

A polymeric or thermoplastic tool can be replicated off a metal master tool. The master tool will have the inverse pattern desired for the production tool. The master tool can be made in the same manner as the production tool. In one embodiment, the master tool is made out of metal, e.g., nickel and is diamond turned. The polymeric sheet material can be heated along with the master tool such that the polymeric material is embossed with the master tool pattern by pressing the two together. A polymeric or thermoplastic material can also be extruded or cast onto the master tool and then pressed. The thermoplastic material is cooled to solidify and produce the production tool. If a thermoplastic production tool is utilized, then care should be taken not to generate excessive heat that may distort the thermoplastic production tool limiting its life. More information concerning the design and fabrication of production tooling or master tools can be found in U. S. Patent Nos. 5,152,917 (Pieper et al.); 5,435,816 (Spurgeon et al.); 5,672,097 (Hoopman et al.); 5,946,991 (Hoopman et al.); 5,975,987 (Hoopman et al.); and 6,129,540 (Hoopman et al.).

Access to cavities can be from an opening in the top surface or bottom surface of the mold. In some instances, the cavities can extend for the entire thickness of the mold. Alternatively, the cavities can extend only for a portion of the thickness of the mold. In one embodiment, the top surface is substantially parallel to bottom surface of the mold with the cavities having a substantially uniform depth. At least one side of the mold, that is, the side in which the cavities are formed, can remain exposed to the surrounding atmosphere during the step in which the volatile component is removed.

The cavities have a specified three-dimensional shape to make the shaped abrasive particles. The depth dimension is equal to the perpendicular distance from the top surface to the lowermost point on the bottom surface. The depth of a given cavity can be uniform or can vary along its length and/or width. The cavities of a given mold can be of the same shape or of different shapes.

The third process step involves filling the cavities in the mold with the alpha alumina precursor dispersion (e.g., by a conventional technique). In some embodiments, a knife roll coater or vacuum slot die coater can be used. A mold release can be used to aid in removing the particles from the mold if desired. Typical mold release agents include oils such as peanut oil or mineral oil, fish oil, silicones, polytetrafluoroethylene, zinc stearate, and graphite. In general, mold release agent such as peanut oil, in a liquid, such as water or alcohol, is applied to the surfaces of the production tooling in contact with the sol-gel such that between about 0.1 mg/in² (0.02 mg/cm²) to about 3.0 mg/in² (0.46 mg/cm²), or between about 0.1 mg/in² (0.02 mg/cm²) to about 5.0 mg/in² (0.78 mg/cm²) of the mold release agent is present per unit area of the mold when a mold release is desired. In some embodiments, the top surface of the mold is coated with the alpha alumina precursor dispersion. The alpha alumina precursor dispersion can be pumped onto the top surface.

Next, a scraper or leveler bar can be used to force the alpha alumina precursor dispersion fully into the cavity of the mold. The remaining portion of the alpha alumina precursor dispersion that does not enter cavity can be removed from top surface of the mold and recycled. In some embodiments, a small portion of the alpha alumina precursor dispersion can remain on the top surface and in other embodiments the top surface is substantially free of the dispersion. The pressure applied by the scraper or leveler bar is typically less than 100 psi (0.7 MPa), less than 50 psi (0.3 MPa), or even less than 10 psi (69 kPa). In some embodiments, no exposed surface of the alpha alumina precursor dispersion extends substantially beyond the top surface to ensure uniformity in thickness of the resulting shaped abrasive particles.

The fourth process step involves removing the volatile component to dry the dispersion. Desirably, the volatile component is removed by fast evaporation rates. In some embodiments, removal of the volatile component by evaporation occurs at temperatures above the boiling point of the volatile component. An upper limit to the drying temperature often depends on the material the mold is made from. For polypropylene tooling the temperature should be less than the melting point of the plastic. In one embodiment, for a water dispersion of between about 40 to 50 percent solids and a polypropylene mold, the drying temperatures can be between about 90 °C to about 165 °C, or between about 105 °C to about 150 °C, or between about 105 °C to about 120 °C. Higher temperatures can lead to improved production speeds but can also lead to degradation of the polypropylene tooling limiting its useful life as a mold.

The fifth process step involves removing resultant precursor shaped abrasive particles with from the mold cavities. The precursor shaped abrasive particles can be removed from the cavities by using the following processes alone or in combination on the mold: gravity, vibration, ultrasonic vibration, vacuum, or pressurized air to remove the particles from the mold cavities.

The precursor abrasive particles can be further dried outside of the mold. If the alpha alumina precursor dispersion is dried to the desired level in the mold, this additional drying step is not necessary. However, in some instances it may be economical to employ this additional drying step to minimize the time that the alpha alumina precursor dispersion resides in the mold. Typically, the precursor shaped abrasive particles will be dried from 10 to 480 minutes, or from 120 to 400 minutes, at a temperature from 50 °C to 160 °C, or at 120 °C to 150 °C.

The sixth process step involves calcining the precursor shaped abrasive particles. During calcining, essentially all the volatile material is removed, and the various components that were present in the alpha alumina precursor dispersion are transformed into metal oxides. The precursor shaped abrasive particles are generally heated to a temperature from 400 °C to 800 °C, and maintained within this temperature range until the free water and over 90 percent by weight of any bound volatile material are removed. In an optional step, it may be desired to introduce the modifying additive by an impregnation process. A water-soluble salt can be introduced by impregnation into the pores of the calcined, precursor shaped abrasive particles. Then the precursor shaped abrasive particles are pre-fired again. This option is further described in U. S. Patent No. 5,164,348 (Wood).

The seventh process step involves sintering the calcined, precursor shaped abrasive particles to form alpha alumina particles. Prior to sintering, the calcined, precursor shaped abrasive particles are not completely densified and thus lack the desired hardness to be used as shaped abrasive particles. Sintering takes place by heating the calcined, precursor shaped abrasive particles to a temperature of from 1000°C to 1650°C and maintaining them within this temperature range until substantially all of the alpha alumina monohydrate (or equivalent) is converted to alpha alumina and the porosity is reduced to less than 15 percent by volume. The length of time to which the calcined, precursor shaped abrasive particles must be exposed to the sintering temperature to achieve this level of conversion depends upon various factors but usually from five seconds to 48 hours is typical.

In another embodiment, the duration for the sintering step ranges from one minute to 90 minutes. After sintering, the shaped abrasive particles can have a Vickers hardness of 10 GPa, 16 GPa, 18 GPa, 20 GPa, or greater.

Other steps can be used to modify the described process such as, for example, rapidly heating the material from the calcining temperature to the sintering temperature, centrifuging the alpha alumina precursor dispersion to remove sludge and/or waste. Moreover, the process can be modified by combining two or more of the process steps if desired. Conventional process steps that can be used to modify the process of this disclosure are more fully described in U. S. Patent No. 4,314,827 (Leitheiser).

More information concerning methods to make shaped abrasive particles is disclosed in U. S. Pat. Appln. Publ. No. 2009/0165394 A1 (Culler et al.).

Shaped abrasive particles are preferably made using tools (i.e., molds) cut using diamond tooling, which provides higher feature definition than other fabrication alternatives such as, for example, stamping or punching. Typically, the cavities in the tool surface have planar faces that meet along sharp edges, and form the sides and top of a truncated pyramid. The resultant shaped abrasive particles have a respective nominal average shape that corresponds to the shape of cavities (e.g., truncated pyramid) in the tool surface; however, variations (e.g., random variations) from the nominal average shape may occur during manufacture, and shaped abrasive particles exhibiting such variations are included within the definition of shaped abrasive particles as used herein.

Preferably, the base and the top of the shaped abrasive particles are substantially parallel, resulting in prismatic or truncated pyramidal shapes, and the dihedral angle between the base and each of the sides may independently range from 45 to 90 degrees, typically 70 to 90 degrees, more typically 75 to 85 degrees, although these are not requirements.

The shaped abrasive particles are typically selected to have a length in a range of from 0.001 mm to 26 mm, more typically 0.1 mm to 10 mm, and more typically 0.5 mm to 5 mm, although other lengths may also be used. In some embodiments, the length may be expressed as a fraction of the thickness of the bonded abrasive article (e.g., wheel) in which it is contained. For example, the shaped abrasive particle may have a length greater than half the thickness of the bonded abrasive wheel. In some embodiments, the length of the shaped abrasive particles may be greater than the thickness of the bonded abrasive wheel.

The shaped abrasive particles are typically selected to have a width in a range of from 0.001 mm to 26 mm, more typically 0.1 mm to 10 mm, and more typically 0.5 mm to 5 mm, although other lengths may also be used.

The shaped abrasive particles are typically selected to have a thickness in a range of from 0.005 mm to 1.6 mm, more typically, from 0.2 to 1.2 mm.

In some embodiments, the shaped abrasive particles may have an aspect ratio (length to thickness) of at least 2, 3, 4, 5, 6, or more.

Surface coatings on the shaped abrasive particles may be used to improve the adhesion between the shaped abrasive particles and a binder material in abrasive articles, or can be used to aid in electrostatic deposition of the shaped abrasive particles. In one embodiment, surface coatings as described in U. S. Patent No. 5,352,254 (Celikkaya) in an amount of 0.1 to 2 percent surface coating to shaped abrasive particle weight may be used. Such surface coatings are described in U. S. Patent Nos. 5,213,591 (Celikkaya et al.); 5,011,508 (Wald et al.); 1,910,444 (Nicholson); 3,041,156 (Rowse et al.); 5,009,675 (Kunz et al.); 5,085,671 (Martin et al.); 4,997,461 (Markhoff-Matheny et al.); and 5,042,991 (Kunz et al.). Additionally, the surface coating may prevent the shaped abrasive particle from capping. Capping is the term to describe the phenomenon where metal particles from the workpiece being abraded become welded to the tops of the shaped abrasive particles. Surface coatings to perform the above functions are known to those of skill in the art.

Typically, crushed abrasive particles are independently sized according to an abrasives industry recognized specified nominal grade. Exemplary abrasive industry recognized grading standards include those promulgated by ANSI (American National Standards Institute), FEPA (Federation of European Producers of Abrasives), and JIS (Japanese Industrial Standard). Such industry accepted grading standards include, for example: ANSI 4, ANSI 6, ANSI 8, ANSI 16, ANSI 24, ANSI 30, ANSI 36, ANSI 40, ANSI 50, ANSI 60, ANSI 80, ANSI 100, ANSI 120, ANSI 150, ANSI 180, ANSI 220, ANSI 240, ANSI 280, ANSI 320, ANSI 360, ANSI 400, and ANSI 600; FEPA P8, FEPA P12, FEPA P16, FEPA P24, FEPA P30, FEPA P36, FEPA P40, FEPA P50, FEPA P60, FEPA P80, FEPA P100, FEPA P120, FEPA P150, FEPA P180, FEPA P220, FEPA P320, FEPA P400, FEPA P500, FEPA P600, FEPA P800, FEPA P1000, FEPA P1200; FEPA F8, FEPA F12, FEPA F16, and FEPA F24;.and JIS 8, JIS 12, JIS 16, JIS 24, JIS 36, JIS 46, JIS 54, JIS 60, JIS 80, JIS 100, JIS 150, JIS 180, JIS 220, JIS 240, JIS 280, JIS 320, JIS 360, JIS 400, JIS 400, JIS 600, JIS 800, JIS 1000, JIS 1500, JIS 2500, JIS 4000, JIS 6000, JIS 8000, and JIS 10,000. More typically, the crushed aluminum oxide particles and the non-seeded sol-gel derived alumina-based abrasive particles are independently sized to ANSI 60 and 80, or FEPA F36, F46, F54 and F60 or FEPA P60 and P80 grading standards.

Alternatively, the abrasive particles can be graded to a nominal screened grade using U. S.A. Standard Test Sieves conforming to ASTM E-11 "Standard Specification for Wire Cloth and Sieves for Testing Purposes". ASTM E-11 prescribes the requirements for the design and construction of testing sieves using a medium of woven wire cloth mounted in a frame for the classification of materials according to a designated particle size. A typical designation may be represented as - 18+20 meaning that the shaped abrasive particles pass through a test sieve meeting ASTM E-11 specifications for the number 18 sieve and are retained on a test sieve meeting ASTM E-11 specifications for the number 20 sieve. In one embodiment, the shaped abrasive particles have a particle size such that most of the particles pass through an 18 mesh test sieve and can be retained on a 20, 25, 30, 35, 40, 45, or 50 mesh test sieve. In various embodiments, the shaped abrasive particles can have a nominal screened grade comprising: -18+20, -20+25, -25+30, -30+35, -35+40, -40+45, -45+50, -50+60, -60+70, -70+80, -80+100, -100+120, -120+140, -140+170, -170+200, - 200+230, -230+270, -270+325, -325+400, -400+450, -450+500, or -500+635. Alternatively, a custom mesh size could be used such as -90+100.

The abrasive particles may, for example, be uniformly or non-uniformly distributed throughout the bonded abrasive article. For example, if the bonded abrasive wheel is a grinding wheel or a cut-off wheel, the abrasive particles may be concentrated toward the middle (e.g., located away from the outer faces of a grinding or cut-off wheel), or only in the outer edge, i.e., the periphery, of a grinding or cut-off wheel. The center portion may contain a lesser amount of abrasive particles. In another variation, first abrasive particles may be in one side of the wheel with different abrasive particles on the opposite side. However, typically all the abrasive particles are homogenously distributed among each other, because the manufacture of the wheels is easier.

Bonded abrasive articles according to the present disclosure may comprise additional abrasive particles beyond those mentioned above, subject to weight range requirements of the other constituents being met. Examples include fused aluminum oxide (including fused aluminazirconia), brown aluminum oxide, blue aluminum oxide, silicon carbide (including green silicon carbide), garnet, diamond, cubic boron nitride, boron carbide, chromia, ceria, and combinations thereof.

In preferred embodiments, the bonded abrasive matrix is free of vitreous binder. By this is meant that there is, at most, insufficient vitreous binder to retain the abrasive particles, and/or the vitreous binder is not uniformly enough distributed to retain the abrasive particles. Most preferably, there is no vitreous binder present at all. Exemplary vitreous binders include silicaceous glasses. Likewise, the bonded abrasive matrix precursor may be free of silicaceous glasses.

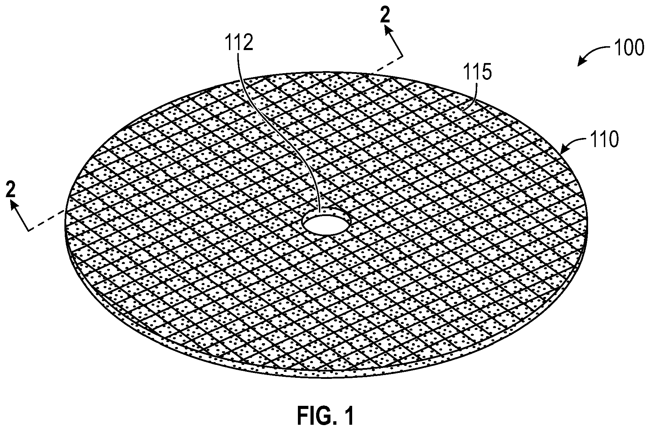

FIG. 1 shows an exemplary bonded abrasive article. Referring now to FIG. 1, bonded abrasive cut-off wheel 100. Bonded abrasive matrix 110 forms an annulus around central hole 112 used for attaching cut-off wheel 100 to, for example, a power-driven tool (not shown).

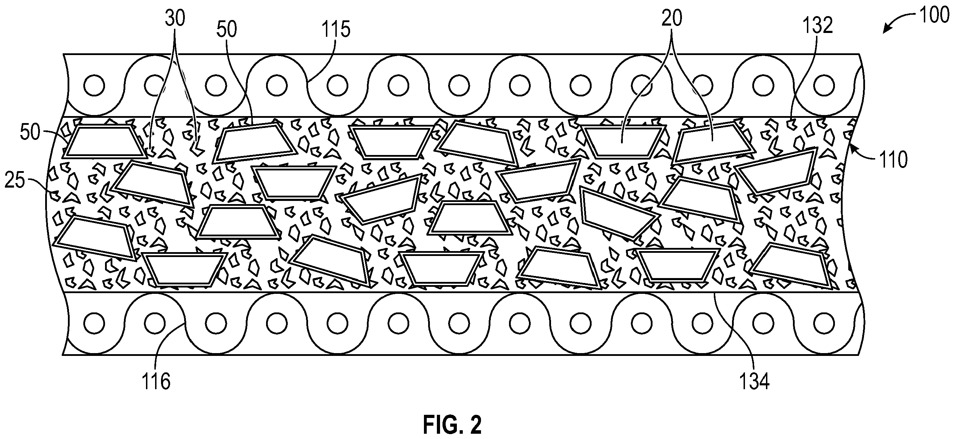

Referring now to FIG. 2, cut-off wheel 100 includes shaped abrasive particles 20 and optional conventionally-crushed abrasive particles 30, and phenolic binder 25. Cut-off wheel 100 has optional first scrim 115 and optional second scrim 116, which are disposed on opposed major surfaces 132, 134 of cut-off wheel 100.

In some embodiments, bonded abrasive articles according to the present disclosure contain additional grinding aid(s) such as, for example, polytetrafluoroethylene particles, cryolite, sodium chloride, FeS₂ (iron disulfide), potassium aluminum fluoride, or KBF₄; typically, in amounts of from 1 to 25 percent by weight, more typically 4 to 10 percent by weight, based on the total weight of the bonded abrasive matrix, subject to weight range requirements of the other constituents being met. Grinding aids are added to improve the cutting characteristics of the cut-off wheel, generally by reducing the temperature of the cutting interface. The grinding aid may be in the form of single particles or an agglomerate of grinding aid particles. Examples of precisely shaped grinding aid particles are taught in U. S. Patent Publ. No. 2002/0026752 A1 (Culler et al.).

In some embodiments, the bonded abrasive matrix contains plasticizer such as, for example, that available as SANTICIZER 154 PLASTICIZER from UNIVAR USA, Inc. of Chicago, Illinois.

Bonded abrasive articles according to the present disclosure may contain additional components such as, for example, filler particles, subject to weight range requirements of the other constituents being met. Filler particles may be added to occupy space and/or provide porosity. Porosity enables the bonded abrasive article to shed used or worn abrasive particles to expose new or fresh abrasive particles. Bonded abrasive articles (e.g., wheels) according to the present disclosure have any range of porosity; for example, from about 1 percent to 50 percent, typically 1 percent to 40 percent by volume. Examples of fillers include bubbles and beads (e.g., glass, ceramic (alumina), clay, polymeric, metal), cork, gypsum, marble, limestone, flint, silica, aluminum silicate, and combinations thereof.

At least some of the abrasive particles may be surface-treated with a coupling agent to enhance adhesion of the abrasive particles to the phenolic binder. The abrasive particles may be treated before combining them with the curable phenolic resin(s), in one embodiment. Such treatment may be in the form of a coating 50, as illustrated in FIG. 2.

Catechol has a similar structure to phenol, the base compound for phenolic resins. FIG. 3 illustrates a chemical reaction 300 for creating a polymerized catechol-based resin. A catechol-based compound 310 is reacted with formaldehyde 320 using a catalyst 330 to form an alternating chain copolymer 340. The catechol-based compound 310 is illustrated as having 4 non-specific functional groups, R₁, R₂, R₃, and R₄. At least two of these groups must be a hydrogen atom in order to facilitate polymerization. While examples and methods herein describe results obtained using ortho dihydroxyl-benzene, referred to herein as catechol, it is expressly contemplated that other base compounds are possible. The reaction 300 may be catalyzed using either an acid or basic catalyst. Heat may also be provided to decrease reaction time or increase reaction kinetics.

Catechol resins can be prepared by conventional step-growth polymerization with catechol and formaldehyde in the presence of acidic or basic catalysts. The synthesized resins are easy to coat on abrasive particles and highly compatible with the phenolic bonding resins forming the bonded article matrix. When formaldehyde is charged in excess over catechol (in molar ratio) during the reaction, then a resole type catechol resin is created and additional crosslinkers are not necessary to make the material a thermoset system. On the other hand, when excess catechol was used, Novolac type catechol resin is generated, which requires crosslinkers to form cured network structures. Hexamethylene tetramine (HEXA) is one example curing agent, however others are possible. The catechol resins are capable of forming a strong bond with abrasive grain while forming chemical and / or covalent bonds with typical phenolic bonding resins. As a result, when the resin coated grain is used to make bonded abrasive articles, it can improve overall performance by enhancing the bond strength between the abrasive and the matrix resin. The catechol moiety is particularly important for abrasive grains made from a metal oxide, such as alumina or zirconia.

The resulting alternating copolymer can terminate in either catechol or methylol functional groups, depending on the initial inputs. If catechol is provided in molar excess, the copolymer ends in catechol functional groups, resulting in a catechol novolac resin. In one embodiment, catechol novolac resin is formed from a preferred molar ratio of catechol to formaldehyde between 1 and 2, such that catechol : formaldehyde is between 1: 1 and 2:1. Conversely, if formaldehyde is provided in molar excess, the copolymer ends in methylol groups, resulting in a catechol resole resin. In one embodiment, catechol resole resin is formed from a preferred molar ratio of formaldehyde to catechol between 1: 1 and 2:1. Methylol groups are significantly more reactive, resulting in a resinlike polymer that will cure to a solid. The catechol-ending polymer can still be cured to a solid, but will require a curing agent. Hexamethylenetetramine is one catalyst that can be used, but others are also possible., such as dialdehydes (e.g. glyoxal(ethandial), glutaric dialdehyde), furfuril alcohol, and multimethylol compounds (e.g., 2,6-bis(hydroxyemthyl)-p-cresol).

Polymerized catechol, or a catechol-like molecule with formaldehyde, is similar in structure to phenolic resin. The polymerization reaction to form phenolic resin is illustrated in FIG. 4. Phenol 410 reacts with formaldehyde 420 to form a copolymer 440. When formaldehyde is provided in molar excess, a resole phenol 450 is formed. When phenol is provided in molar excess, a novalac phenol 460 is formed. Similar to the catechol polymerization reaction, phenolic resin can be formed using either an acidic or basic catalyst and under hear for a faster reaction rate.

A catechol polymer can be used as a coating for abrasive particles in order to increase the bond between abrasive particles and the phenolic resin matrix. The catechol coated abrasive particle may contain at least 0.1% catechol resin by weight, or at least about 0.5% catechol resin by weight, or at least about 1% catechol resin by weight, or at least about 2% catechol resin by weight, or at least about 3% catechol resin by weight, or at least about 4% catechol resin by weight, or at least about 5% catechol resin by weight.

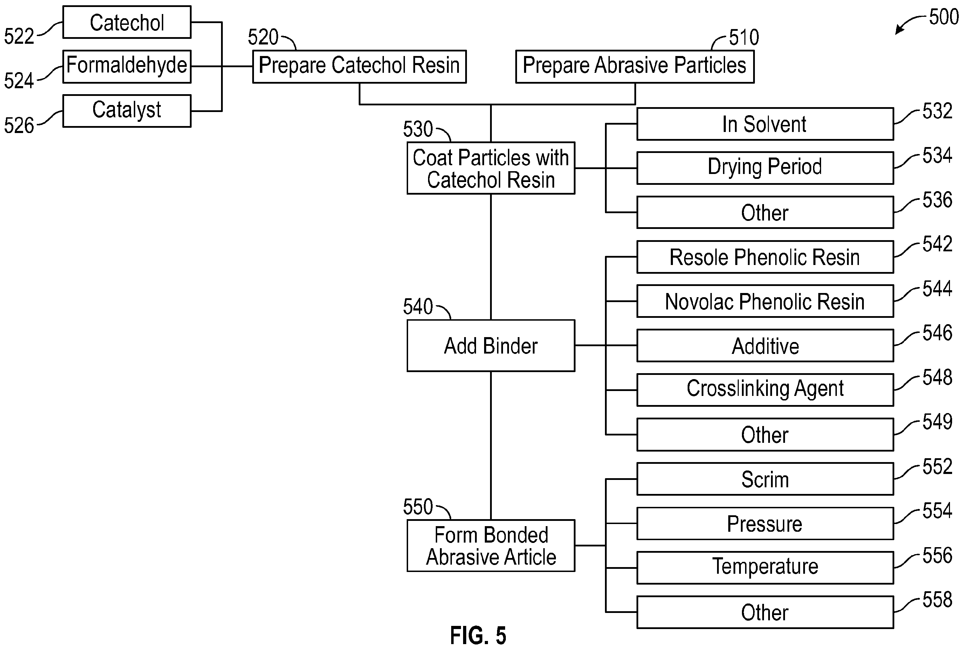

FIG. 5 illustrates a method of forming a bonded abrasive article in accordance with embodiments described herein. Method 500 may be useful for forming resin bonded abrasive articles.

In block 510, abrasive particles are prepared. Abrasive particles can include crushed abrasive particles, in which case preparing them can include screening them by size. Abrasive particles can also include shaped abrasive particles, which can be made using the methods described above.

In block 520, a catechol resin may be prepared. The catechol resin is prepared by combining catechol 522, formaldehyde 524 and a catalyst 526. The preparation in block 520 can form a resoleform catechol resin or a novolac form catechol resin, depending on whether formaldehyde 524 or catechol 522 is present in molar excess. The catechol resin may be formed in situ., in some embodiments.

In block 530, the catechol resin is combined with abrasive particles such that a catechol resin coating is achieved on substantially all surfaces of the abrasive particles. In some embodiments this is achieved by combining the catechol resin and the abrasive particles in a solvent 532. A drying period 534 may be needed to remove a solvent or to allow complete curing of the catechol resin. Other materials 536 may be used to assist in the coating. In the case of a novolac form catechol resin, the mixing may need to take place in acidic or basic conditions for sufficient catalyzation of the catechol resin to provide a coating on the abrasive particles. The resin may be applied as a weight percentage, with respect to total grain weight, between 0.001 to 0.50 wt%. For example, the resin may have a weight percent, with respect to total grain weight, of at least 0.001, at least 0.01, at least 0.1, at least 0.15, at least 0.20, at least 0.25, at least 0.30, at least 0.35, at least 0.40, at least 0.45 or at least 0.50 wt%.

In block 540, the coated abrasive articles are mixed with resin binder. The resin binder may be a resole phenolic binder 542, a novolac phenolic binder 544, or a combination of resole and novolac phenolic binders. An additive 546 may be present. For example, paraffin oil, or another lubricating oil may be added to the binder mixture to provide or improve functionality of either the processability or the performance of a bonded abrasive article. Other additives, including fillers, secondary abrasive particles or other materials 549 may also be present. Additionally, in the embodiments where the resin binder is a novolac binder, a crosslinking agent 548 may be needed for the binder to cure.

In block 550, an abrasive article is formed. Forming an abrasive article includes forming the resin-abrasive particle mixture into a desired shape. This may include application of pressure 554. A mold may also be used to create a desired shape. A scrim 552 may be placed on one or more sides of the bonded abrasive article. Full curing of the binder may require application of heat 556.

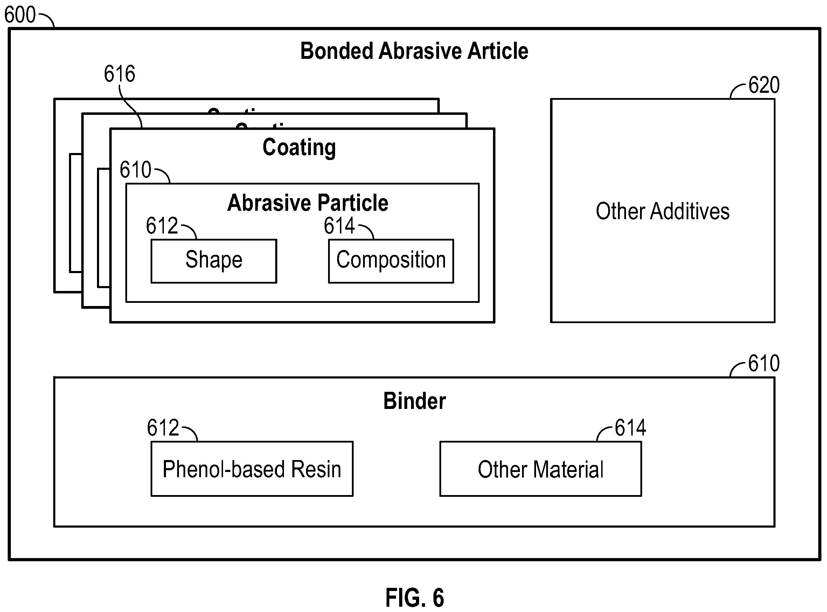

FIG. 6 illustrates a block diagram of components of a bonded abrasive article according to embodiments described here. Bonded abrasive article 600 is formed of a plurality of abrasive particles 610. The abrasive particles may have an associated shape 612. The shape may be a precisely-selected shape such as a triangle-shaped or trapezoidal-shape particle. However, other shapes are also expressly contemplated. Shape 612 may also differ between particles. For example, particles of two or more different sizes may be present. Additionally, precisely-shaped particles may be present in combination with crushed or platey particles. Each abrasive particle 610 has a composition. In some embodiments, abrasive particles include aluminum oxide. However, other metal oxides are also envisioned for other embodiments. Additionally, abrasive particles may be present within bonded abrasive article 600 with two or more differing compositions. An individual particle 610 may also have a first and second composition, for example alpha alumina doped with zirconia, or another suitable combination.

At least some of the abrasive particles have a coating 616. Coating may be a catechol-based polymer resin, in one embodiment. In another embodiment the coating is a polymeric coating with a catechol-like base compound reacted with formaldehyde. The coating may be a resole type coating or a novolac type coating. For example, the catechol-like base compound may be any of dopamine, 4-fluorocatechol, 4-methylcatechol, 4-chlorocatechol, 4-bromocatechol, 1,2-dihydroxynaphthalene, 2,3-dihydroxynaphthalene, 1,2,4-trihydroxybenzene, 3-methoxycatechol, 3,4-dihydroxybenzaldehyde, 4-tert-butylpyrocatechol, 3,4-dihydroxybenzonitrile, 2,3-dihydroxybenzaldehyde, 3', 4'-dihydroxyacetophenone, 3,4-dihydroxybenzyl alcohol, 3,4-dihydroxybenzophenone, 4-nitrocatechol, nordihydroguaiaretic acid, methyl 3,4-dihydroxybenzoate, 4-allylpyrocatechol, sodium 6,7-dihydroxynaphthalene-2-sulfonate, 3,5-di-tert-butylcatechol, 2-(3,4-dihydroxyphenyl)ethyl alcohol, 3,4-dihydroxybenzoic acid, tiron monohydrate, pyrogallol, tannic acid, gallic acid, 5-methylpyrogallol, 2,3,6,7,10,11-hexahydroxytriphenylene, hexahydroxybenzene, 3,4,5-trihydroxybenzaldehyde, 2,3,4-trihydroxybenzaldehyde, and 2,3,4,4'-tetrahydroxydiphenylmethane, for example. Of those described above, examples of a surface treatment agent containing a pyrogallol group include pyrogallol, tannic acid, gallic acid, 5-methylpyrogallol, 2,3,6,7,10,11-hexahydroxytriphenylene, hexahydroxybenzene, 3,4,5-trihydroxybenzaldehyde, 2,3,4-trihydroxybenzaldehyde, and 2,3,4,4'-tetrahydroxydiphenylmethane

Bonded abrasive article 600 also includes a binder material 610. Binder 610 is a phenol-based resin 612 and may include other additives 614, such as filler material. Phenol-based resin may be a resole type resin, in one embodiment, or a novolac type resin.

Bonded abrasive article 600 can also include other materials or additives 620, such as grinding aids, lubricants, or porosity forming additives.

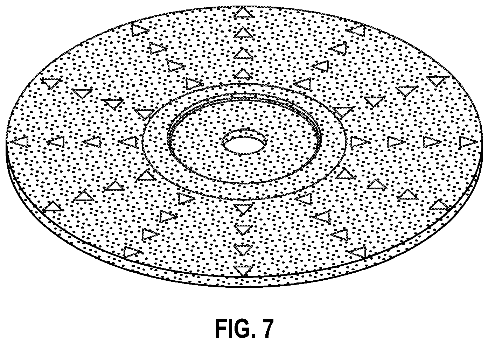

FIG. 7 illustrates an example bonded abrasive article. Article 700 is a cut-off wheel.

Bonded abrasive wheels according to the present disclosure are useful, for example, as cut- off wheels and abrasives industry Type 27 (e.g., as in American National Standards Institute standard ANSI B7.1-2000 (2000) in section 1.4.14) depressed-center grinding wheels.

Cut-off wheels are typically 0.80 millimeter (mm) to 16 mm in thickness, more typically 1 mm to 8 mm, and typically have a diameter between 2.5 cm and 100 cm, more typically between about 7 cm and 13 cm, although other dimensions may also be used (e.g., wheels as large as 100 cm in diameter are known). An optional center hole may be used to attaching the cut-off wheel to a power-driven tool. If present, the center hole is typically 0.5 cm to 2.5 cm in diameter, although other sizes may be used. The optional center hole may be reinforced; for example, by a metal flange. Alternatively, a mechanical fastener may be axially secured to one surface of the cut-off wheel. Examples include threaded posts, threaded nuts, Tinnerman nuts, and bayonet mount posts.

Optionally, bonded abrasive wheels, especially cut-off wheels, according to the present disclosure may further comprise a scrim and/or backing that reinforces the bonded abrasive wheel; for example, disposed on one or two major surfaces of the bonded abrasive wheel, or disposed within the bonded abrasive wheel. Examples include paper, polymeric film, metal foil, vulcanized fiber, synthetic fiber and/or natural fiber nonwovens (e.g., lofty open nonwoven synthetic fiber webs and meltspun scrims), synthetic and/or natural fiber knits, synthetic fiber and/or natural fiber wovens (e.g., woven glass fabrics/scrims, woven polyester fabrics, treated versions thereof, and combinations thereof). Examples of suitable porous reinforcing scrims include porous fiberglass scrims and porous polymeric scrims (e.g., comprising polyolefin, polyamide, polyester, cellulose acetate, polyimide, and/or polyurethane) which may be melt-spun, melt-blown, wet-laid, or air-laid, for example. In some instances, it may be desirable to include reinforcing staple fibers within the bonding medium, so that the fibers are homogeneously dispersed throughout the cut-off wheel.

The selection of porosity and basis weight of the various reinforcing members (e.g., scrims and backings) described herein are within the capability of those skilled in the abrasives art, and typically depend on the intended use.

Bonded abrasive articles (e.g., grinding wheels and cut-off wheels) according to the present disclosure are generally made by a molding process. During molding, a precursor binder material, either liquid organic, powdered inorganic, powdered organic, or a combination of thereof, is mixed with the abrasive particles. In some instances, a liquid medium (either resin or a solvent) is first applied to the abrasive particles to wet their outer surface, and then the wetted particles are mixed with a powdered medium. Bonded abrasive articles (e.g., bonded abrasive wheels) according to the present disclosure may be made by compression molding, injection molding, transfer molding, or the like. The molding can be done either by hot or cold pressing or any suitable manner known to those skilled in the art.

Curing temperatures of organic binder precursor materials will vary with the material chosen and bonded abrasive article type and design (e.g., wheel design). Selection of suitable conditions is within the capability of one of ordinary skill in the art. Exemplary conditions for a phenolic binder may include an applied pressure of about 20 tons per 4 inches diameter (244 kg/cm²) at room temperature followed by heating at temperatures up to about 185°C for sufficient time to cure the organic binder precursor materials.

Bonded abrasive wheels according to the present disclosure are useful, for example, for abrading a workpiece. For example, they may be formed into grinding or cut-off wheels that exhibit good grinding characteristics while maintaining a relatively low operating temperature that may avoid thermal damage to the workpiece.

Cut-off wheels can be used on any right angle grinding tool such as, for example, those available from Ingersoll-Rand, Sioux, Milwaukee, and Apex Brands, Apex, North Carolina. The tool can be electrically or pneumatically driven, generally at speeds from about 1000 to 50000 RPM.

During use, the bonded abrasive wheel can be used dry or wet. During wet grinding, the wheel is used in conjunction with water, oil-based lubricants, or water-based lubricants. Bonded abrasive wheels according to the present disclosure may be particularly useful on various workpiece materials such as, for example, carbon steel sheet or bar stock and more exotic metals (e.g., stainless steel or titanium), or on softer more ferrous metals (e.g., mild steel, low alloy steels, or cast irons).

### EXAMPLES

Unless otherwise noted, all parts, percentages, ratios, etc. in the Examples and the rest of the specification are by weight. In the examples, grams is abbreviated as "g", and wt. % means weight percent based on total weight unless otherwise specified.

**TABLE 1: List of Materials**

| Acronym | Manufacturer | Comments |
|---|---|---|
| CE | Catechol (99%) from Alfa Aesar, Ward Hill, MA, USA | Monomer for resin synthesis |
| FH | Formaldehyde (37% w/w aq. Soln) from Alfa Aesar, Ward Hill, MA, USA | Monomer for resin synthesis |
| SH | Sodium hydroxide from EMD Millipore, Darmstadt,Germany | Polymerization Catalyst |
| OAD | Oxalic acid dihydrate from EMD Millipore, Darmstadt,Germany | Polymerization Catalyst |
| HEXA | Hexamethylenetetramine from Alfa Aesar, Ward Hill, MA, USA | Crosslinker |
| ACE | Acetone from EMD Millipore, Darmstadt,Germany | Solvent |
| PAF | Potassium aluminum fluoride from KBM Affilips Master Alloys, Delfzijl, Netherland | Bonded wheel filler |
| F400 | ZWSK F400 Fused White Aluminum Oxide from Imerys Fused Minerals | Bonded wheel filler |
| SAP | alpha alumina abrasive particles shaped as truncated triangular pyramids with equal base side lengths of 1.32 mm, a height of 0.38 mm, and a sidewall inward taper angle of 8 degrees (i.e., the dihedral angle between any sidewall and the base is nominally 82 degrees) | Abrasive grain |
| SAP-ResinA | SAP treated with 0.15wt% Resin A | Coated abrasive grain |
| SAP-ResinB 1 | SAP treated with 0.25wt% Resin B | Coated abrasive grain |
| SAP-ResinB2 | SAP treated with 0.35wt% Resin B | Coated abrasive grain |
| RP | liquid phenolic resin obtained as PREFERE 92 5136G1 from Dynea Erkner GmbH, Erkner, Germany | Bonded wheel liquid resin |
| PP | a mixture of 39.4% of novolac phenolic resin (obtained as HEXION 0224P from Momentive Specialty Chemicals Columbus, Ohio), 8.2% of ZWSK F400 Fused White Aluminum Oxide (obtained from Imerys Fused Minerals), 0.4% of carbon black (obtained as LUVOMAXXX LB/S from Lehmann & Voss & Co. KG Hamburg, Germany), and 52.0% of PAF (potassium aluminum fluoride from KBM Affilips Master Alloys, Delfzijl, Netherlands) | Bonded wheel powder premix |
| PO | Paraffin oil, obtained | Bonded wheel additive |
| SCRIM1 | fiberglass mesh, obtained as "RXO 10-125 x 23mm" from Rymatex Sp. Zo.o., Rymanów, Poland | Bonded wheel scrim |
| SCRIM2 | fiberglass mesh scrim attached to a cloth mesh, obtained as" RXV 10-125 x 23mm" from Rymatex Sp. zo.o, Rymanów, Poland | Bonded wheel scrim |

### EXAMPLE 1 (Resin A: 0.15wt% Catechol Resole Coating)

In a 250 mL one neck round bottom flask, 74.58g CE, 68.72g FH (37%), 56.72g deionized water and 5.42g SH was measured. The mixture was stirred with a magnetic stir bar to make a homogenous liquid mixture. Then the solution was heated to 45 C and continuously stirred for 24 hours at 45 C. This is the prepared catechol resin solution called Resin A.

In a quart glass jar, 650 g of abrasive grain, SAP, was measured. An overhead mechanical mixer (IKA Eurostar 40 Digital) with a steel blade (blade size: 80mm X 20mm) was placed to mix the grain. Then, 1.95g (0.15wt%) prepared catechol resin solution was applied dropwise on the grain surface using a pipet while the grain was continuously mixed with the mechanical mixer (stirring rpm: 300). When addition of resin solution is finished, the mixture was kept stirring for another 5 min to evenly coat the grain surface. The treated grain was transferred to an aluminum tray and was dried under ambient conditions for at least 24 hours before use. The final grain is referred to as SAP-ResinA. Table 2 shows grain and resin solution compositions for examples.

RP (58g) mixture was added to 650 grams of SAP-ResinA and was mixed in a KitchenAid Commercial mixer (Model KSM500PSSM). This mixture was then combined with 294 grams of PP in an KitchenAid Commercial mixer (Model KSM500PSSM). In the middle of the second mixing step, 5.0mL PO was added to the mixture. The mix was left to sit for a day and then the resulting cut-off mix was sieved using 12-mesh screen to remove aggregates.

SCRIM2-M1 was placed in the bottom of a 5-inch (127-mm) diameter x 1-inch (2.5-cm) deep metal mold cavity, coated side up. The mold had an inner diameter of 23-mm. The cut-off wheel fill mixture (38g) was then placed on top of the coated scrim. SCRIM2-M1 was then placed on top of the fill mixture, coated side down. A 123 mm diameter paper label was added on top of SCRIM2-M1. A metal flange 28 mm x 22.45 mm x 1.2 mm from Lumet PPUH in Jaslo, Poland was placed on top of the label. The mold was closed and the scrim-fill-scrim sandwich was pressed at a load of 50 tons (907 kg) at room temperature for 2sec. The cut-off wheel precursor was then removed from the mold and cured in a stack with a 30 hour (hr) cure cycle: 2 hrs at 75 °C, 2 hrs at 90 °C, 5 hrs at110°C, 3 hrs at 135°C, 3 hrs at 188°C, 13 hrs at 188°C, and a then 2 hrs cool down to 60°C. The final thickness of the wheel was 1.8mm. Four replicates of Example 1 were made for a total of five wheels.

**TABLE 2**

| Example | Grain (g) | Resin | Resin Solution Composition | | | Catechol Resin Level (%) |
|---|---|---|---|---|---|---|
| | | | Resin Solution (g) | HEXA(g) | Acetone (g) | |
| 1 | 650 | Resin A | 1.95 | - | - | 0.15 |
| 2 | 650 | Resin B | 3.25 | 0.16 | 0.8 | 0.25 |
| 3 | 650 | Resin B | 4.55 | 0.23 | 1.15 | 0.35 |

### EXAMPLE 2 (Resin B1: 0.25wt% Novolac Resole Coating)

Example 1 was repeated except that the grain used to make the cut-off wheel was SAP-ResinB. Resin B was made in a 250 mL one neck round bottom flask by placing 83.0g of CE, FH (37%) 45.9g, deionized water 71g and 4.2g OAD. The mixture was stirred with a magnetic stir bar to make a homogenous liquid mixture. Then the reaction was heated to 90°C and was continuously stirred for 8 hours at 90°C.

Then, 3.25g (0.25wt%) prepared catechol resin B solution was applied dropwise on the grain surface using a pipet while the grain was continuously mixed with the mechanical mixer (stirring rpm: 300). When addition of resin solution was finished, the mixture was kept stirring for another 5 min to evenly coat the grain surface. The treated grain was transferred to an aluminum tray and was dried under ambient conditions for at least 24 hours before use. The final grain is referred to as SAP-ResinB1. Table 2 shows grain and resin solution compositions for examples.

Five cut-off wheels were made according to Example 2.

### EXAMPLE 2 (Resin B2: 0.35wt% Novolac Resole Coating)

Example 2 was repeated except that 4.55g (0.35wt%) prepared catechol resin B solution was applied dropwise on the grain surface using a pipet while the grain was continuously mixed with the mechanical mixer (stirring rpm: 300). When addition of resin solution was finished, the mixture was kept stirring for another 5 min to evenly coat the grain surface. The treated grain was transferred to an aluminum tray and was dried under ambient conditions for at least 24 hours before use. The final grain is referred to as SAP-ResinB2. Table 2 shows grain and resin solution compositions for examples.

Five cut-off wheels were made according to Example 3.

### Comparative Example A

Example 1 was repeated except that the SAP grain was left uncoated. Five cut-off wheels were made according to Comparative Example A.

### CUTTING TEST METHOD

A 40-inch (1 m) long sheet of 0.12 inch (3 mm) thick stainless steel was secured with its major surface inclined at a 35-degree angle relative to horizontal. A guide rail was secured along the downward-sloping top surface of the inclined sheet. A DeWalt Model DWE431144N 4.5-inch (11.4-cm)/5-inch (12.7-cm) cut-off wheel angle grinder was secured to the guide rail such that the tool was guided in a downward path under the force of gravity. A cut-off wheel for evaluation was mounted on the tool such that the cut-off wheel encountered the full thickness of the stainless steel sheet when the cut-off wheel tool was released to traverse downward, along the rail under gravitational force. The cut-off wheel tool was activated to rotate the cut-off wheel at 10000 rpm, the tool was released to begin its descent, and the length of the resulting cut in the stainless steel sheet was measured after 60 seconds. Dimensions of the cut-off wheel were measured before and after the cutting test to determine wear. One minute cut is the distance the wheel cut in one minute [mm]. Wear rate [mm3/min] is the rate of volume removal of the wheel as it cuts.

As shown in Table 3, catechol resole and catechol Novolac grain coatings both reduce wear rate while maintaining one minute cut.

**TABLE 3**

| | One Minute Cut [mm] | Wear Rate [mm3/min] |
|---|---|---|
| Example 1 | 910 | 3328 |
| | 890 | 2489 |
| | 903 | 3431 |
| | 865 | 3508 |
| | 883 | 2676 |
| Example 2 | 824 | 2376 |
| | 847 | 2419 |
| | 813 | 2455 |
| | 871 | 3353 |
| | 824 | 2663 |
| Example 3 | 824 | 2649 |
| | 847 | 2829 |
| | 871 | 2915 |
| | 883 | 3386 |
| | 824 | 2442 |
| Comp. Example A | 910 | 4129 |
| | 841 | 4330 |
| | 865 | 4711 |
| | 782 | 3256 |
| | 813 | 3632 |

## Claims

1. A bonded abrasive article (100, 600) comprising:
a plurality of abrasive particles (20, 610), each particle having a coating (50, 616) of a catechol-like polymer resin on one side;
a phenolic resin binder (25, 612) that forms a bonded abrasive matrix (110) of the bonded abrasive article, and wherein the plurality of abrasive particles are retained in the phenolic binder.

2. The bonded abrasive article (100, 600) of claim 1, wherein the phenolic binder (25, 612) comprises resole phenolic binder.

3. The bonded abrasive article (100, 600) of any of claims 1-2, wherein the phenolic binder (25, 612) comprises novolac phenolic binder.

4. The bonded abrasive article (100, 600) of any of claims 1-3, wherein the catechol-like polymer comprises an alternating copolymer wherein one of the alternating monomers comprises a catechol-type molecule with an additional functional group.

5. The bonded abrasive article (100, 600) of claim 4, wherein the catechol-like polymer comprises a monomer selected from the group consisting of: dopamine, 4-fluorocatechol, 4-methylcatechol, 4-chlorocatechol, 4-bromocatechol, 1,2-dihydroxynaphthalene, 2,3-dihydroxynaphthalene, 1,2,4-trihydroxybenzene, 3-methoxycatechol, 3,4-dihydroxybenzaldehyde, 4-tert-butylpyrocatechol, 3,4-dihydroxybenzonitrile, 2,3-dihydroxybenzaldehyde, 3', 4'-dihydroxyacetophenone, 3,4-dihydroxybenzyl alcohol, 3,4-dihydroxybenzophenone, 4-nitrocatechol, nordihydroguaiaretic acid, methyl 3,4-dihydroxybenzoate, 4-allylpyrocatechol, sodium 6,7-dihydroxynaphthalene-2-sulfonate, 3,5-di-tert-butylcatechol, 2-(3,4-dihydroxyphenyl)ethyl alcohol, 3,4-dihydroxybenzoic acid, tiron monohydrate, pyrogallol, tannic acid, gallic acid, 5-methylpyrogallol, 2,3,6,7,10,11-hexahydroxytriphenylene, hexahydroxybenzene, 3,4,5-trihydroxybenzaldehyde, 2,3,4-trihydroxybenzaldehyde, and 2,3,4,4'-tetrahydroxydiphenylmethane.

6. The bonded abrasive article (100, 600) of any of claims 1-5, wherein the catechol coating (50, 616) comprises between about 1% and about 5% by weight of each of the plurality of abrasive particles.

7. A method (500) for forming a bonded abrasive article (100, 600), the method comprising:
providing abrasive particles (block 510);
coating the abrasive particles with a catechol-type resin (block 530);
combining the coated abrasive particles with a phenolic resin binder to form a bonded article mixture (block 540); and
forming the bonded article mixture into a shaped bonded abrasive article precursor; and
curing the bonded abrasive article precursor to form the bonded abrasive article (block 550).

8. The method (500) of claim 7, and also comprising:
forming the catechol-type resin coating by reacting a catechol-like monomer with formaldehyde (block 520).

9. The method (500) of claim 8, wherein reacting comprises reacting the catechol-like monomer and formaldehyde in the presence of an acidic or basic catalyst.

10. The method (500) of claim 8, wherein the catechol-like monomer comprises catechol with an additional functional group.

11. The method (500) of claim 8, wherein formaldehyde is provided in molar excess.

12. The method (500) of claim 8, wherein the catechol-like monomer is provided in molar excess.

13. The method (500) of claim 8, wherein the catechol-like monomer is catechol.

14. The method (500) of any of claims 7-13, wherein the coating is either a resole-type catechol-type resin or a novolac-type catechol-type resin.

15. An abrasive particle (20, 610) comprising:
a metal oxide based abrasive particle; and
a catechol-based copolymer resin coating (50, 616) covering a side of the abrasive particle.

## Patentansprüche

1. Ein beschichteter Schleifgegenstand (100, 600), umfassend:
eine Mehrzahl von Schleifteilchen (20, 610), wobei jedes Teilchen eine Beschichtung (50, 616) eines catechinähnlichen Polymerharzes auf einer Seite aufweist;
ein Phenolharzbindemittel (25, 612), das eine gebundene Schleifmatrix (110) des gebundenen Schleifgegenstands ausbildet, und wobei die Mehrzahl von Schleifteilchen in dem Phenolbindemittel zurückgehalten wird.

2. Der gebundene Schleifgegenstand (100, 600) nach Anspruch 1, wobei das Phenolbindemittel (25, 612) ein Resolphenolbindemittel umfasst.

3. Der gebundene Schleifgegenstand (100, 600) nach einem der Ansprüche 1 bis 2, wobei das Phenolbindemittel (25, 612) ein Novolak-Phenolbindemittel umfasst.

4. Der gebundene Schleifgegenstand (100, 600) nach einem der Ansprüche 1 bis 3, wobei das catechinähnliche Polymer ein alternierendes Copolymer umfasst, wobei eines der alternierenden Monomere ein catechinartiges Molekül mit einer zusätzlichen funktionellen Gruppe umfasst.

5. Der gebundene Schleifgegenstand (100, 600) nach Anspruch 4, wobei das catechinähnliche Polymer ein Monomer umfasst, das ausgewählt ist aus der Gruppe bestehend aus: Dopamin, 4-Fluorcatechin, 4-Methylcatechin, 4-Chlorcatechin, 4-Bromcatechin, 1,2-Dihydroxynaphthalin, 2,3-Dihydroxynaphthalin, 1,2,4-Trihydroxybenzol, 3-Methoxycatechin, 3,4-Dihydroxybenzaldehyd, 4-tert-Butylpyrocatechin, 3,4-Dihydroxybenzonitril, 2,3-Dihydroxybenzaldehyd, 3',4'-Dihydroxyacetophenon, 3,4-Dihydroxybenzylalkohol, 3,4-Dihydroxybenzophenon, 4-Nitrocatechin, Nordihydroguaiaretinsäure, Methyl-3,4-Dihydroxybenzoat, 4-Allylpyrocatechin, Natrium-6,7-dihydroxynaphthalin-2-sulfonat, 3,5-Di-tert-butylcatechin, 2-(3,4-Dihydroxyphenyl)ethylalkohol, 3,4-Dihydroxybenzoesäure, Tironmonohydrat, Pyrogallol, Gerbsäure, Gallussäure, 5-Methylpyrogallol, 2,3,6,7,10,11-Hexahydroxytriphenylen, Hexahydroxybenzol, 3,4,5-Trihydroxybenzaldehyd, 2,3,4-Trihydroxybenzaldehyd und 2,3,4,4'-Tetrahydroxydiphenylmethan.

6. Der gebundene Schleifgegenstand (100, 600) nach einem der Ansprüche 1 bis 5, wobei die Catechinbeschichtung (50, 616) zwischen etwa zu 1 Gew.-% und etwa 5 Gew.-% jedes der Mehrzahl von Schleifteilchen umfasst.

7. Ein Verfahren (500) zum Ausbilden eines gebundenen Schleifgegenstands (100, 600), das Verfahren umfassend:
Bereitstellen von Schleifteilchen (Block 510);
Beschichten der Schleifteilchen mit einem catechinartigen Harz (Block 530);
Kombinieren der beschichteten Schleifteilchen mit einem Phenolharzbindemittel, um eine gebundene Gegenstandmischung auszubilden (Block 540); und
Ausbilden der gebundenen Gegenstandmischung in einem geformten gebundenen Schleifgegenstandvorläufer; und Härten des gebundenen Schleifgegenstandvorläufers, um den gebundenen Schleifgegenstand auszubilden (Block 550).

8. Das Verfahren (500) nach Anspruch 7, und ebenso umfassend:
Ausbilden der catechinartigen Harzbeschichtung durch Umsetzen eines catechinähnlichen Monomers mit einem Formaldehyd (Block 520).

9. Das Verfahren (500) nach Anspruch 8, wobei das Umsetzen ein Umsetzen des catechinähnlichen Monomers und des Formaldehyds in der Gegenwart eines sauren oder basischen Katalysators umfasst.

10. Das Verfahren (500) nach Anspruch 8, wobei das catechinähnliche Monomer Catechin mit einer zusätzlichen funktionellen Gruppe umfasst.

11. Das Verfahren (500) nach Anspruch 8, wobei das Formaldehyd in einem molaren Überschuss bereitgestellt wird.

12. Das Verfahren (500) nach Anspruch 8, wobei das catechinähnliche Monomer in einem molaren Überschuss bereitgestellt wird.

13. Das Verfahren (500) nach Anspruch 8, wobei das catechinähnliche Monomer Catechin ist.

14. Das Verfahren (500) nach einem der Ansprüche 7 bis 13, wobei die Beschichtung entweder ein resolartiges catechinartiges Harz oder ein novolakartiges catechinartiges Harz ist.

15. Ein Schleifteilchen (20, 610), umfassend:
ein Schleifteilchen auf Metalloxidbasis; und
eine Copolymerharzbeschichtung (50, 616) auf Catechinbasis, die eine Seite des Schleifteilchens bedeckt.

## Revendications

1. Article abrasif lié (100, 600) comprenant :
une pluralité de particules abrasives (20, 610), chaque particule ayant un revêtement (50, 616) d'une résine polymère de type catéchol sur un côté ;
un liant de résine phénolique (25, 612) qui forme une matrice abrasive liée (110) de l'article abrasif lié, et dans lequel la pluralité de particules abrasives sont retenues dans le liant phénolique.

2. Article abrasif lié (100, 600) selon la revendication 1, dans lequel le liant phénolique (25, 612) comprend un liant phénolique résol.

3. Article abrasif lié (100, 600) selon l'une quelconque des revendications 1 à 2, dans lequel le liant phénolique (25, 612) comprend un liant phénolique novolac.

4. Article abrasif lié (100, 600) selon l'une quelconque des revendications 1 à 3, dans lequel le polymère de type catéchol comprend un copolymère alterné dans lequel l'un des monomères alternés comprend une molécule de type catéchol avec un groupe fonctionnel supplémentaire.

5. Article abrasif lié (100, 600) selon la revendication 4, dans lequel le polymère de type catéchol comprend un monomère choisi dans le groupe constitué de : dopamine, 4-fluorocatéchol, 4-méthylcatéchol, 4-chlorocatéchol, 4-bromocatéchol, 1,2-dihydroxynaphtalène, 2,3-dihydroxynaphtalène, 1,2,4-trihydroxybenzène, 3-méthoxycatéchol, 3,4-dihydroxybenzaldéhyde, 4-tert-butylpyrocatéchol, 3,4-dihydroxybenzonitrile, 2,3-dihydroxybenzaldéhyde, 3',4'-dihydroxyacétophénone, alcool 3,4-dihydroxybenzylique, 3,4-dihydroxybenzophénone, 4-nitrocatéchol, acide nordihydroguaiarétique, 3,4-dihydroxybenzoate de méthyle, 4-allylpyrocatéchol, 6,7-dihydroxynaphtalène-2-sulfonate de sodium, 3,5-di-tert-butylcatéchol, alcool 2-(3,4-dihydroxyphényl)éthylique, acide 3,4-dihydroxybenzoïque, tiron monohydraté, pyrogallol, acide tannique, acide gallique, 5-méthylpyrogallol, 2,3,6,7,10,11-hexahydroxytriphénylène, hexahydroxybenzène, 3,4,5-trihydroxybenzaldéhyde, 2,3,4-trihydroxybenzaldéhyde, et 2,3,4,4'-tétrahydroxydiphénylméthane.

6. Article abrasif lié (100, 600) selon l'une quelconque des revendications 1 à 5, dans lequel le revêtement de catéchol (50, 616) comprend entre environ 1 % et environ 5 % en poids de chacune de la pluralité de particules abrasives.

7. Procédé (500) permettant de former un article abrasif lié (100, 600), le procédé comprenant :
la fourniture de particules abrasives (bloc 510) ;
le revêtement des particules abrasives avec une résine de type catéchol (bloc 530) ;
la combinaison des particules abrasives revêtues avec un liant de résine phénolique pour former un mélange d'articles liés (bloc 540) ; et
la formation du mélange d'articles liés en un précurseur d'articles abrasifs liés profilé ; et le durcissement du précurseur d'article abrasif lié pour former l'article abrasif lié (bloc 550).

8. Procédé (500) selon la revendication 7, et comprenant en outre :
la formation du revêtement de résine de type catéchol par réaction d'un monomère de type catéchol avec du formaldéhyde (bloc 520).

9. Procédé (500) selon la revendication 8, dans lequel la réaction comprend la réaction du monomère de type catéchol et du formaldéhyde en présence d'un catalyseur acide ou basique.

10. Procédé (500) selon la revendication 8, dans lequel le monomère de type catéchol comprend du catéchol avec un groupe fonctionnel supplémentaire.

11. Procédé (500) selon la revendication 8, dans lequel le formaldéhyde est fourni en excès molaire.

12. Procédé (500) selon la revendication 8, dans lequel le monomère de type catéchol est fourni en excès molaire.

13. Procédé (500) selon la revendication 8, dans lequel le monomère de type catéchol est du catéchol.

14. Procédé (500) selon l'une quelconque des revendications 7 à 13, dans lequel le revêtement est une résine de type catéchol de type résol ou une résine de type catéchol de type novolac.

15. Particule abrasive (20, 610) comprenant :
une particule abrasive à base d'oxyde métallique ; et
un revêtement de résine copolymère à base de catéchol (50, 616) couvrant un côté de la particule abrasive.
